# EUROPEAN PATENT APPLICATION

(11) **EP 1 972 791 A1**
(43) Date of publication of application: **24.09.2008**
(21) Application number: 05820361.3
(22) Date of filing: 22.12.2005
(51) Int. Cl.: F04D 13/06, F04D 29/046, H02K 21/24

(54) **FLAT BRUSHLESS MOTOR PUMP AND ELECTRIC WATER PUMP UNIT FOR VEHICLE EMPLOYING FLAT BRUSHLESS MOTOR PUMP**

(71) Applicant: Yamamoto Electric Corporation, Sukagawa-shi Fukushima 962-0818 (JP)
(72) Inventor: YOSHIDA, Hiroshi, Fukushima 962-0818 (JP); YAGINUMA, Shinichi, Fukushima 962-0818 (JP)
(74) Representative: Hill, Justin John
(86) International application number: PCT/JP2005/023611
(87) International publication number: WO 2007/072561

(57) **Abstract**

A flattened brushless motor pump has: a flattened brushless motor; an impeller coupled to a rotary shaft of the flattened brushless motor; a pump casing for housing the flattened brushless motor and the impeller, the pump casing having a suction port for sucking liquid and a discharge port for discharging liquid; and a motor cover constituting a portion of the pump casing for holding a bearing of the flattened brushless motor, the bearing bearing the rotary shaft relatively, wherein: the flattened brushless motor pump sucks liquid from the suction port and discharges liquid from the discharge port by rotating the rotary shaft of the flattened brushless motor; and the flattened brushless motor has: a stator unit having cores around which a plurality of armature coils are wound and terminals electrically connected to the armature coils, and being formed by molding the cores and the terminals with resin in a watertight manner; and a rotor unit having magnets disposed facing the cores via a gap, the rotary shaft and a yoke fixed to the rotary shaft and holding the magnets, wherein the bearing is an in-water bearing for sliding the rotary shaft by a water film.

## Description

### TECHNICAL FIELD

The present invention relates to a fluid pump, and more particularly to a flattened brushless motor pump suitable for use with a liquid cooling apparatus such as a radiator of an internal combustion engine of a vehicle, and a vehicle electric water pump unit using the flattened brushless motor pump.

### BACKGROUND ART

Many conventional liquid cooling pumps for internal combustion engines mounted on vehicles are driven by transmitting rotation of a pulley mounted on a rotary shaft of the engine to the pump. Since the pump of the type is driven by using a belt, its mount position is essentially restricted near at the engine. Since the degree of freedom of the mount position is small, a wasteful space is left in an engine room. While the engine is driven at high speed, a flow rate becomes unnecessarily large, or when the engine is stopped in a high temperature state of cooling liquid, the property of engine oil and the like is deteriorated. As a so-called water pump, an electric water pump has been adopted recently, by preparing an electric pump driven by a motor in addition to a pump driven by the engine and integrally assembling the pump and the motor.

The electric water pump of this type uses a motor as its power source. Therefore, even during an engine stop, for example, even during an idling stop, the flow rate of liquid circulating in the engine can be maintained properly so that cooling can be conducted at a good efficiency. While the engine is driven at high speed, it is possible to cool the engine by circulating liquid at a flow rate suitable for a liquid temperature. Use value of the electric water pump is increasing also from the viewpoint of fuel consumption improvement.

A conventional motor pump has the structure such as disclosed in JP-A-5-10286. According to the techniques disclosed therein, a rotor mounting magnets around the shaft commonly used by a pump impeller is disposed in a casing made of non-magnetic material as a pump housing. A stator having an armature winding is disposed around the rotor magnets at a position facing the rotor with the casing being interposed therebetween. Since the rotor unit is mounted in the pump housing, the number of components involved between the motor and pump can be reduced and sealing performance can be improved.

Patent Document 1: JP-A-5-10286

### DISCLOSURE OF THE INVENTION

### PROBLEM TO BE SOLVED BY THE INVENTION

However, although the above-described conventional techniques allow the rotor to be disposed in the pump casing, it is necessary to dispose the stator core and windings outside the pump casing, to supply electric power to the stator, and to hold and encapsulate the stator. This Still leaves the problem of compactness and mount feasibility. Furthermore, the motor has a tubular shape elongated along the shaft direction of the rotor so that it is not possible to solve the problem of wasteful space in the engine room of the vehicle.

Furthermore, although the above-described conventional techniques provide the structure that the rotor is disposed in the pump casing, the structure of a bearing is not described specifically, leaving a fear of resident fluid near at the bearing. Still further, since the casing is elongated along the rotor shaft direction, fluid cannot turn (flow) smoothly from a pump suction port to a pump discharge port. Further, since the rotor is long in the shaft direction, fluid has a large resistance relative to the rotor body constituted of the rotor shaft, hub and rotor magnets. There arises therefore a problem that a motor is required to have a large size and a large consumption power. Generally, in structuring a motor pump, a watertight performance of the bearing is required to be devised. In this connection, there arises a problem that the sealing structure requires a large work and the bearing become defective due to liquid leakage from the sealing portion.

Another conventional example is a canned motor pump in which an electric feeder portion such as a stator is encapsulated in a liquid-tight manner in a can made of non-magnetic material. In this case, the number of components is increased by the can, and there arises a problem that an exothermic body such as armature coils and switching elements cannot be cooled sufficiently.

The present invention has been made in view of the above-described problems of the conventional techniques, and an object of the present invention is to provide a flattened brushless motor pump and a vehicle electric water pump unit using the flattened brushless motor pump, respectively capable of solving the above-described problems of the conventional techniques.

### MEANS FOR SOLVING THE PROBLEMS

In order to solve the above-described problems, the present invention is configured in the following manner.

(1) A flattened brushless motor pump comprise: a flattened brushless motor; an impeller coupled to a rotary shaft of the flattened brushless motor; a pump casing for housing the flattened brushless motor and the impeller, the pump casing having a suction port for sucking liquid and a discharge port for discharging liquid; and a motor cover constituting a portion of the pump casing for holding a bearing of the flattened brushless motor, the bearing bearing the rotary shaft rotatively, wherein: the flattened brushless motor pump sucks liquid from the suction port and discharges liquid from the discharge port by rotating the rotary shaft of the flattened brushless motor; and the flattened brushless motor comprises: a stator unit having cores around which a plurality of armature coils are wound and terminals electrically connected to the armature coils, and being formed by molding the cores and the terminals with resin in a watertight manner; and a. rotor unit having magnets disposed facing the cores via a gap, the rotary shaft and a yoke fixed to the rotary shaft and holding the magnets, wherein the bearing is an in-water for sliding the rotary shaft by a water film.

(2) A flattened brushless motor pump comprises: a flattened brushless motor; an impeller coupled to a rotary shaft of the flattened brushless motor; a pump casing for housing the flattened brushless motor and the impeller, the pump casing having a suction port for sucking liquid and a discharge port for discharging liquid; and a motor cover constituting a portion of the pump casing for holding a bearing of the flattened brushless motor, the bearing bearing the rotary shaft rotatively, wherein: the flattened brushless motor pump sucks liquid from the suction port and discharges liquid from the discharge port by rotating the rotary shaft of the flattened brushless motor; and the flattened brushless motor comprises: a stator unit having cores around which a plurality of armature coils are wound, a control board for feeding power to the armature coils and driving and controlling the motor and terminals electrically connected to the control board, and being formed by molding the cores, the control board and the terminals with resin in a watertight manner; and a rotor unit having magnets disposed facing the cores via a gap and a yoke fixed to the rotary shaft and holding the magnets, wherein the bearing is an in-water bearing for sliding the rotary shaft by a water film.

(3) In the flattened brushless motor pump of (1) of (2), a hole is disposed passing through the rotary shaft along an axial direction so that liquid flowed from the suction port of the pump passes along an inner circumferential portion of the bearing, thereafter flows in the hole and returns to a side of the suction port.

(4) In the flattened brushless motor pump of (3), a plurality of grooves as fluid flow paths are formed in an outer circumferential portion of the bearing along the axial direction of the rotary shaft so that liquid flowed from the suction port passes through the plurality of grooves, thereafter flows in the hole and returns to the side of the suction port.

(5) In the flattened brushless motor pump of (1) or (2), the cores are made by integrally molding bonded soft magnetic material.

(6) In the flattened brushless motor pump of (5), upper teeth of a ring shape are disposed on a plane of the cores on a side of the armature coils, concentrically with the rotary shaft, the upper teeth being made of a same material as material of the cores.

(7) In the flattened brushless motor pump of any one of (1) to (6), the impeller is made of resin and molded integrally with the yoke.

(8) In the flattened brushless motor pump of any one of (1) to (6), the impeller is made of resin and molded integrally with the yoke, covering the magnets excepting a contact plane between the magnets and the yoke.

(9) A vehicle electric water pump constituting a liquid cooling unit for circulating cooling water between a vehicle engine and a heat exchanger, comprises: a flattened brushless motor; an impeller coupled to a rotary shaft of the flattened brushless motor; a pump casing for housing the flattened brushless motor and the impeller, the pump casing having a suction port for sucking liquid and a discharge port for discharging liquid; and a motor cover constituting a portion of the pump casing for holding a bearing of the flattened brushless motor, the bearing bearing the rotary shaft relatively, wherein: the vehicle electric water pump sucks liquid from the suction port and discharges liquid from the discharge port by rotating the rotary shaft of the flattened brushless motor; and
the flattened brushless motor comprises :
a stator unit having cores around which a plurality of armature coils are wound and terminals electrically connected to the armature coils, and being formed by molding the cores and the terminals with resin in a watertight manner; and
a rotor unit having magnets disposed facing the cores via a gap, the rotary shaft and a yoke fixed to the rotary shaft and holding the magnets,
wherein the bearing is an in-water bearing for sliding the rotary shaft by a water film.

According to the flattened brushless motor pump described in (1), the stator required to be watertight is molded with resin and the bearing is the in-water bearing so that the inside of the motor can have a full-of-liquid structure by a simple configuration. Therefore, a heat generator such as armature coils can be cooled sufficiently to improve the motor characteristics. Since the number of sealing components required for structuring the motor pump, particularly the number of sealing components for the bearing, can be reduced considerably, a friction coefficient between the bearing and rotary shaft becomes small, elongating a lifetime of the bearing. Further, the flattened brushless motor is constituted of an armature of a cored type, the torque characteristics have a performance not inferior to that of a general tubular cored motor. By greatly reducing the size in the axial direction, the flattened type having almost a piping diameter of the radiator can be realized. Therefore, not only the mounting performance can be improved considerably, but also the turn from the pump suction port to pump discharge port can be made smoothly. Still further, since the rotary shaft is short, a fluid contact area is small and a water resistance is small. It is therefore possible to reduce a consumption power more than a tubular motor.

According to the flattened brushless motor pump described in (2), the following operation is possible in addition to the operation of (1). Since the control board for driving the motor is built in the motor, heat radiation of the heat generator such as switching elements can be improved and the reliability of a motor drive unit can be improved. Further, the structure of a control unit of a vehicle or the like can be simplified, use performance can be increased, and the degree of freedom of design of a vehicle or the like can be improved.

According to the flattened brushless motor pump described in (3), a hole is disposed passing through the rotary shaft along an axial direction so that liquid flowed from the suction port of the pump passes a gap between the rotor and stator, passes along an inner circumferential portion of the bearing, thereafter flows in the hole and returns to the suction port side. It is therefore possible to lower a friction coefficient between the bearing and the slide plane of the rotary shaft.

According to the flattened brushless motor pump described in (4), a plurality of grooves as fluid flow paths are formed in an outer circumferential portion of the bearing. It is therefore possible to form liquid circulation along a path of pump suction port → rotor outer circumferential portion gap between the stator and rotor → bearing outer circumferential portion → through hole and to improve the pump performance because there is no fear of resident fluid near at the bearing.

According to the flattened brushless motor pump described in (5), since the core is formed by integrally molding the bonded soft magnetic material, the core can be made lighter in weight than a lamination steel plate, the degree of freedom of core shape design can be improved, and the manufacture performance of a core shape, particularly a flattened type motor core shape, can be improved. A sintered core (pressed powder core) is used which is made of the bonded soft magnetic material formed by integrally molding soft magnetic iron powders and binder and subjected to a sintering process. Since the eddy current loss is small and the torque characteristics can be improved considerably even a flattened motor is used, the motor characteristics have a performance not inferior to that of a tubular cored motor. Since a core loss is small particularly in the high frequency band, higher harmonics can be effectively processed during PWM control and the like.

According to the flattened brushless motor pump described in (6), the upper teeth of a ring shape made of the bonded soft magnetic material are disposed on a magnetic pole plane of the core. It is therefore possible to fill the magnetic gap in a circumference direction and reduce torque ripple and cogging torque. Since the particle is subjected to an insulating coating process three-dimensionally, a magnetic path between the armature coil and magnet can be formed smoothly independently from the direction of magnetic fluxes, increasing a magnetic force.

According to the flattened brushless motor pump described in (7), the impeller is made of resin and molded integrally with the yoke. It is possible to improve the manufacture performance and reduce the weight of the pump. Further, since the impeller is integrally molded with the yoke, without leaving a gap in the axial direction, a height of the impeller can be made to have generally the same length as that of the rotary shaft, contributing to flattening.

According to the flattened brushless motor pump described in (8), the impeller and the rotor after magnets are mounted are integrally molded by resin. Therefore, similar to claim 7, the manufacture performance of the impeller can be improved and a length along the axial direction can be shortened. Furthermore, even if the magnet is stripped or damaged, there is no fear of flying of the magnet because the magnet holding function is added by the resin.

According to the vehicle electric water pump unit described in (9), the flattened brushless motor pump described in any one of (1) to (8) is mounted as a water pump unit for a vehicle internal combustion engine. Therefore, the pump unit can be assembled integrally with a heat exchanger so that a piping work can be simplified, a space in an engine room can be reduced and the degree of design freedom can be improved. As the pump unit is mounted in place of a mechanical pump directly coupled to an engine (power pump driven by the engine via a belt), an unnecessary flow rate can be reduced and an optimum flow rate can be retained, improving a fuel consumption by 2 to 3 %.

### ADVANTAGES OF THE INVENTION

As described above, the present invention can provide the flattened brushless motor pump and the liquid cooling unit using the same in which bearing elements are not necessary to be sealed in a watertight manner, the motor characteristics can be improved and the pump performance can be retained even if a thin motor ifs adopted, only a small space is required for mounting the pump on a radiator or the like, and cooling piping of the unit can be simplified.

### BEST MODE FOR CARRYING OUT THE INVENTION

### (Embodiments)

Embodiments of the present invention will be described with reference to the accompanying drawings.

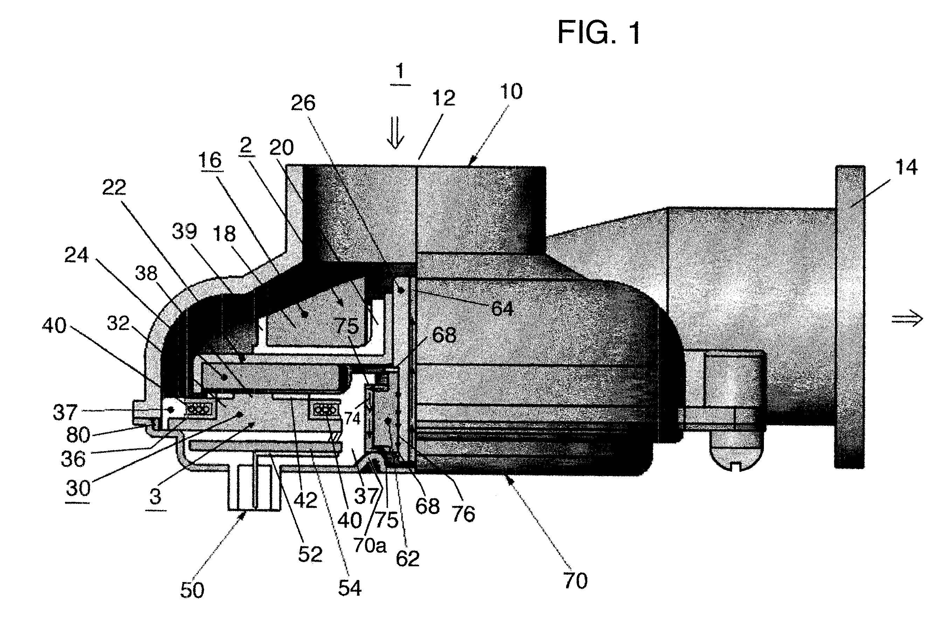

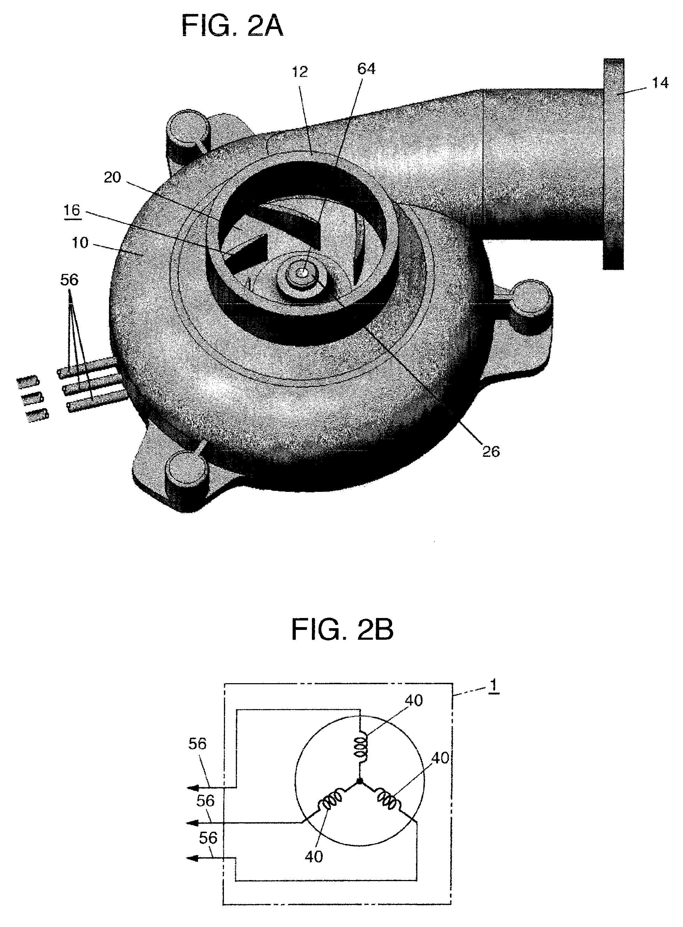

Fig. 1 is a partially broken cross sectional view showing the side and partial internal structure of a brushless motor pump according an embodiment of the present invention, Fig. 2A is a perspective view of the brushless motor pump, and Fig. 2B is an equivalent circuit diagram of the brushless motor pump.

Reference numeral 10 shown in Fig. 1 represents a casing (housing) of a brushless motor pump 1. The casing 10 has a liquid suction port 12 and a liquid discharge port 14. While an impeller (fan) 16 is rotated, liquid is sucked into the suction port 12, turned (flowed) toward the discharge port 14, and discharged from the discharge port 14. The impeller 16 is formed by disposing radially a plurality of blades 18 on a hub 20, being fixed to a rotor yoke 22 of the motor, and being rotated integrally with the rotor yoke 22.

The impeller 16 is made of metal, long-life coolant resistant (ethylene glycol resistant) resin or the like. If the impeller 16 is made of metal, the impeller is adhered to a rotor yoke 22 by welding or the like. If the impeller is to be made of resin, the impeller is formed integrally with the yoke 22 as will be later described. A plurality of magnets (permanent magnets) 24 having magnetic poles and formed in a sector shape or an annular shape are fixed to the yoke 22 by adhesive or the like. The yoke 22 is adhered to a rotary shaft 26 to form a rotor unit 2 constituted of the yoke 22, magnets 24 and rotary shaft 26.

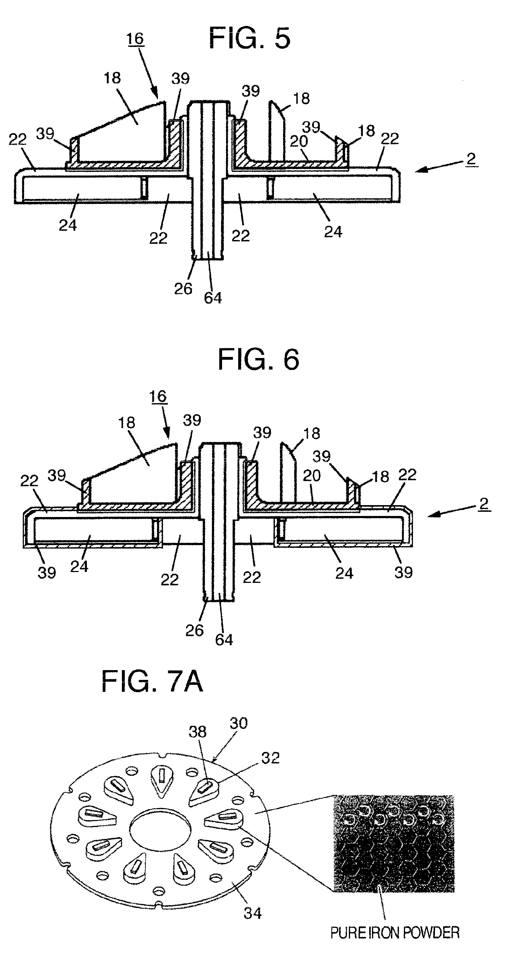

Reference numeral 30 represents a core disposed along the axial direction of the rotary shaft 26 and facing the magnets 24 with a gap being interposed therebetween. As shown in Fig. 7A, the core 30 is formed by forming a plurality of core units 32 of generally a sector shape on a core base 34 of a disc shape, concentrically with the rotary shaft and at an equal pitch along a circumferential direction. A coil 40 as an armature is wound around each core unit via an insulating member 36. The number of core units 32 is, for example, nine. The core 30 is made of a silicon steel plate having a high permeability or is made of a sintered core (pressed powder core) which is made of bonded soft magnetic material formed by integrally molding pure iron powders and binder and subjected to heat treatment. As shown in Fig. 7A, the core has a plurality of core units 32 disposed on the core base 34 of the disc shape, and a projection 38 formed on the upper surface of each core unit 32.

The bonded soft magnetic material may be MBS (Mitsubishi Materials Bonded Soft Magnetic Material) manufactured by Mitsubishi Materials Corporation. The bonded soft magnetic material is a pressed powder mold of iron powders subjected to an electric insulating coating process, and has a higher magnetic flux density than that of conventional iron powder magnetic core material and a resistivity 1000 times higher than that of metal material.

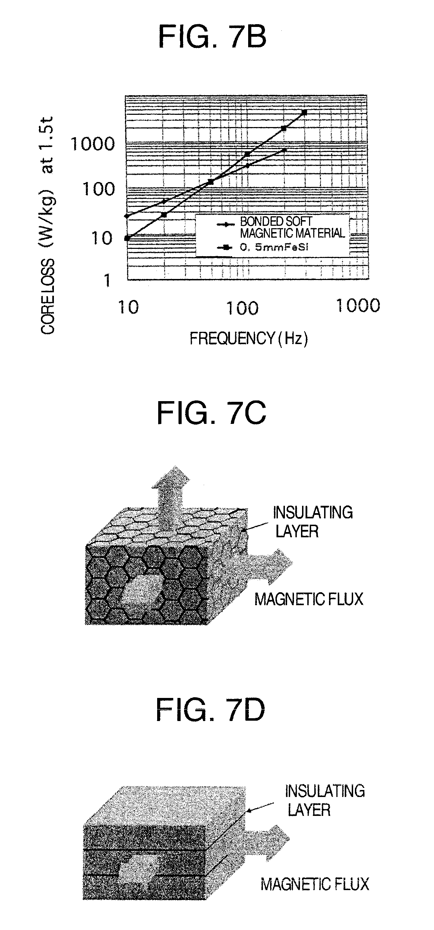

A sintered core capable of integrally molded by one shot is effective particularly for the core 30 of the present invention having a three-dimensional shape. The sintered core can be made lighter in weight than lamination material, and in addition since the sintered core is formed by conducting the electric insulating coating process for iron powders (pure iron powders) having an average grain diameter of about 80 µm to 100 µm, an eddy current loss is extremely small and the magnetic characteristics can be improved. The eddy current loss particularly in the high frequency range is more excellent than silicon steel plate material (refer to Fig. 7B), and higher harmonics can be effectively processed during PWM control and the like.

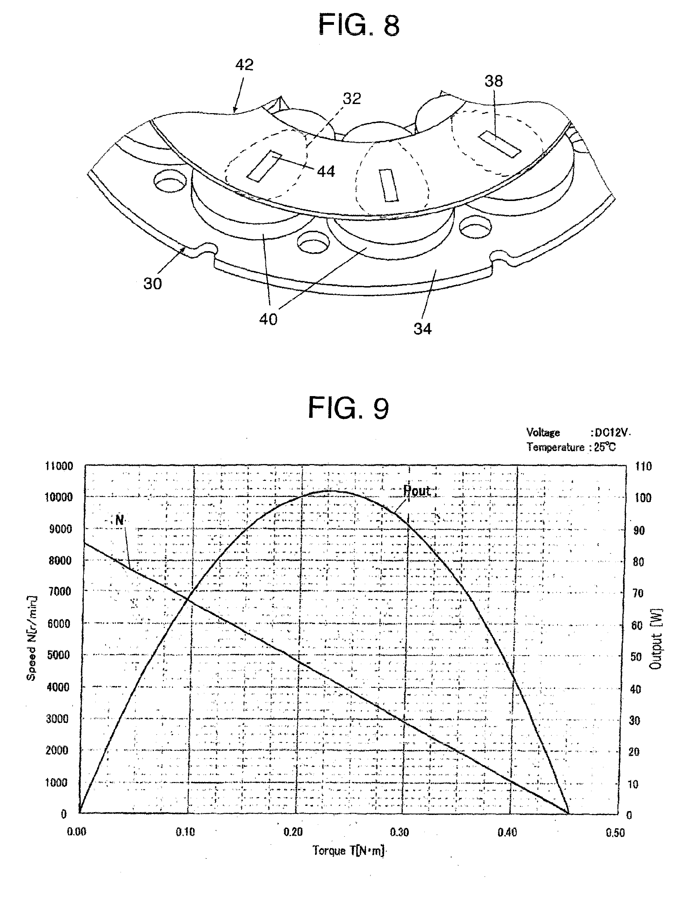

As shown in Fig. 8, upper teeth 42 of a ring shape made of the same material as that of the core 30 are formed on the magnetic pole planes of the core units 32, traversing the armature coils 40 disposed in the circumferential direction. The upper teeth 42 are formed concentrically with the rotary shaft 26, and a plurality of fitting holes are disposed in the circumferential direction, in correspondence with the projections 38 of the core units 32. Each projection 38 of the core unit 32 engages with a corresponding fitting hole 44. The upper teeth 42 may be omitted if necessary motor output characteristics can be retained. The upper teeth form a continuous and circumferential magnetic path in a ring shape so that a circumferential magnetic gap can be filled, providing the advantages of suppressing torque ripple and cogging torque. If the upper teeth 42 are made of the same bonded soft magnetic material as that of the core 30, its workability can be improved.

Since the bonded soft magnetic material is a set of iron powders subjected to the electric insulating coating process, it is three-dimensionally insulated and is magnetically isotropic (refer to Fig. 7C). Since the bonded soft magnetic material is independent from the direction of magnetic fluxes, a magnetic circuit can be designed freely. A smooth magnetic path can be formed between the armature coils 40 and magnets 24 so that a magnetic force can be improved. Since lamination material has two-dimensional insulation (refer to Fig. 7D), it is necessary to design a magnetic circuit along the insulating film.

A board 54 disposing terminals 52 constituting a connector 50 is mounted under the core 30, the winding ends of the armature coils 40 being coupled to the terminals so that a power feeding order can be switched sequentially in accordance with the positions of magnets. In this embodiment, the motor 1 is a so-called three-phase position-sensor-less brushless motor. Three terminals 52 are provided and electrically connected to power feeder lines 56 to receive power from the power feeder lines 56. The core 30 having wound armature coils 40 and upper teeth 42, the board 54 and the stator unit 3 having the terminals 52 are integrally molded by molding resin 37, e.g., polyester resin to allow the motor to be immersed in fluid.

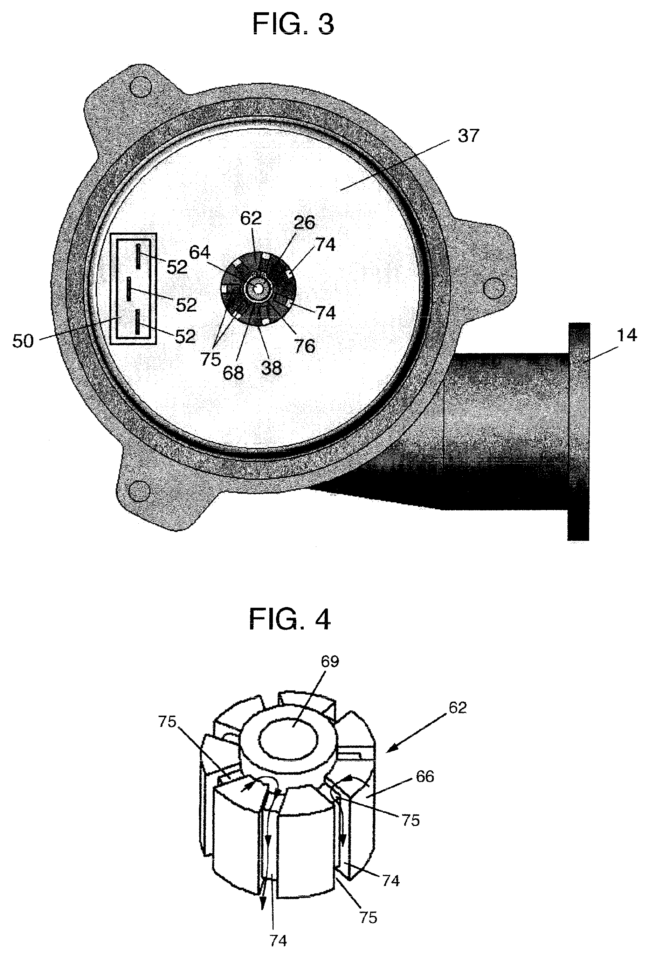

Fig. 3 is a bottom view of the pump 1, with a motor cover 70 being dismounted. Fig. 4 is a perspective view of a bearing 62 for relatively bearing the rotor 2. Arrows in Fig. 4 indicate a flow of liquid. As shown in Figs. 1, 3 and 4, after the stator 3 is molded with molding resin 37, the bearing 62 is disposed in the following manner. Namely, an outer circumference 66 of the bearing 62 is fitted in a central hollow portion 38 of the mold resin 37, the rotary shaft 26 is fitted in an inner circumference of the bearing 62, the positions of the opposite ends of the rotary shaft 26 are set by E rings (stop rings) 68 and 68, and one end of the bearing 62 is abutted on a ring projection 70a formed on the motor cover in a swelled shape. The bearing 62 is a non-water-injection type water bearing (in-wafer bearing) capable of being used in water, and is made of carbon fiber or the like.

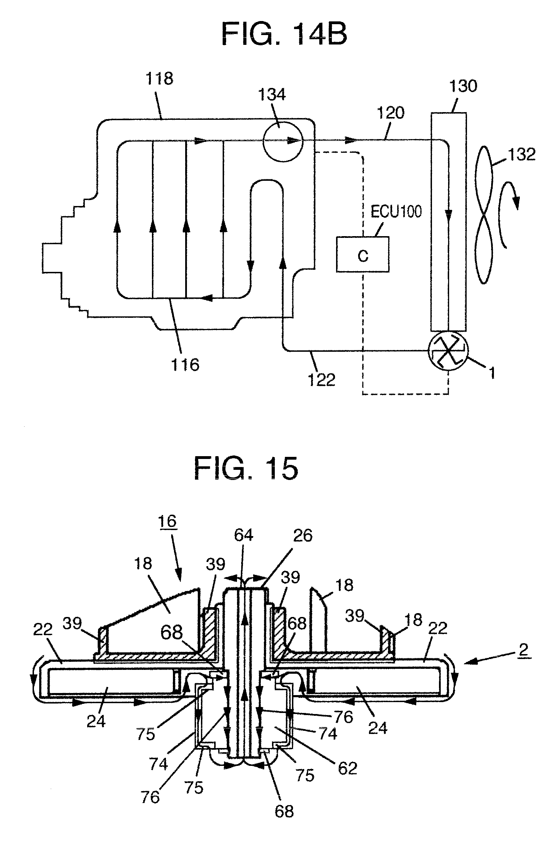

As shown in Figs. 3 and 4, the bearing 62 has a rotary shaft hole 69 in the central region thereof along the axis of the rotary shaft, a plurality of grooves 74 in an outer circumferential portion along the axis of the rotary shaft, and end grooves 75 and 75 continuous with the grooves 74 at the opposite corners of each groove 74, to thereby form flow paths of fluid. The flow paths of fluid will be described. Fig. 15 is a cross sectional view of the rotor and bearing, and arrows indicate flow paths. Namely, fluid (e.g., water) flowed from the impeller 16 side flows from the outer circumference of the yoke 22 via a gap between the stator unit 3 and magnet 24., partially downward via a gap 76 between the inner circumference of the bearing 62 and the rotary shaft 26 (at the sliding plane between the bearing and rotary shaft), flows upward in the through hole 64 of the rotary shaft 26, and returns to the impeller 16 side, as shown by arrows in Figs. 1 and 15. Similarly, in another flow path, fluid flows from the outer circumference of the yoke 22 via a gap between the stator unit 3 and magnet 24, into the inside of the projection 70a of the motor cover 70 via the upper opposite end groove 75, groove 74, and lower opposite end groove 75, flows upward in the through hole 64 of the rotary shaft 26, and returns to the impeller 16 side. These flow paths of fluid are indicated by the arrows in Figs. 1 and 15.

With this arrangement, since the rotary shaft 26 is slid on a water film and fluid circulates always, there is no fear of resident fluid near at the inner wall of the motor cover 70 to thereby improve a pump efficiency, and the structure can be simplified because the bearing is not required to be sealed in a watertight manner. Further, since the size of the rotor constituted of the yoke and magnets can be made small in the axis direction, a resistance between the rotor and water can be lowered, a consumption power can be reduced, and the motor pump can be made more compact. Furthermore, because of the water film in the gap 76 between the bearing and rotary shaft, a good slide can be obtained between the bearing and rotary shaft, and a friction coefficient is very small, considerably elongating a lifetime of the bearing.

Figs. 5 and 6 are cross sectional views showing examples of the structure of the rotor. In the rotor shown in Fig. 5, the impeller 16 is made of long-life coolant resistant resin (resin resistant against long life coolant such as ethylene glycol) having heat resistance and formed integrally with the yoke by the molding resin 39, and thereafter the magnets are mounted on the bottom of the yoke 22. The upper surface of the yoke 22 is made irregular to facilitate attachment of resin. The yoke integrated impeller can be structured in this manner so that its structure is simple and the size along the axial direction can be made small.

Fig. 6 is a cross sectional view showing another example of the structure of the rotor. In the rotor shown in Fig. 6, similarly the impeller 16 is made of long-life coolant resistant resin having heat resistance. After the magnets 24 are mounted on the bottom of the yoke 22, the impeller 16, yoke 22 and magnets 24 are integrally molded by the resin 39, excepting the contact area between the rotary shaft 26 and yoke 22. Namely, not only the upper surface of the yoke 22, the side wall of the yoke and the bottoms and side walls of the magnets 24 are integrally molded with the resin 39.
With this arrangement, it is possible to hold the magnets 24 by coating the non-adhesion sides thereof, relative to the yoke 22. It is possible to prevent dismounting of the magnets 24 to be caused, for example, by vibrations during operation, and flying of the magnets 24 to be caused by damages.

The stator side of the brushless motor pump constructed as above is covered with the motor cover 70 having a saucer shape with a shallow bottom, by using as a sealing member a single 0 ring 80 at the outer circumference edge between the casing 10 and motor cover 70, to thereby complete the brushless motor pump of the present invention. Since the motor units 2 and 3 can be housed in the pump casing (housing) 10, the brushless motor pump can be made very compact, and mounting the motor pump on a vehicle can be improved considerably. Since the stator, rotor and bearing are structured being capable of being immersed in fluid, only one O ring 80 is sufficient for retaining a watertight performance and the watertight structure can be simplified.
The length in the axial direction is not long as in the case of a conventional cored motor, fluid can be turned smoothly from the suction, port to the discharge port, and a pump efficiency is also excellent.

Fig. 9 is a graph, showing motor performance curves of the motor pump of the present invention. As seen from Fig. 9, since an output of 100 W or more is ensured in the target effective torque range, a cooling water quantity of 80 to 110 L/min can be obtained sufficiently which quantity is required by a general vehicle (e.g., an engine up to a cubic volume of about 2500 cc).

The fundamental structure of the brushless motor pump of the present invention has been described illustratively. The brushless motor pump can be operated by mounting a control board constituting a motor drive circuit outside the motor pump, e.g., on the side of a vehicle control unit (ECU unit). In this caste, the board 54 functions as a board for wiring lead lines connected to the armature coils 40 via an induced voltage detector circuit to be described later. The equivalent circuit in the motor pump is shown in Fig. 2B. It is also possible to mount the motor control unit in a board in the motor to improve the handling performance of the motor and the mounting performance relative to an engine.

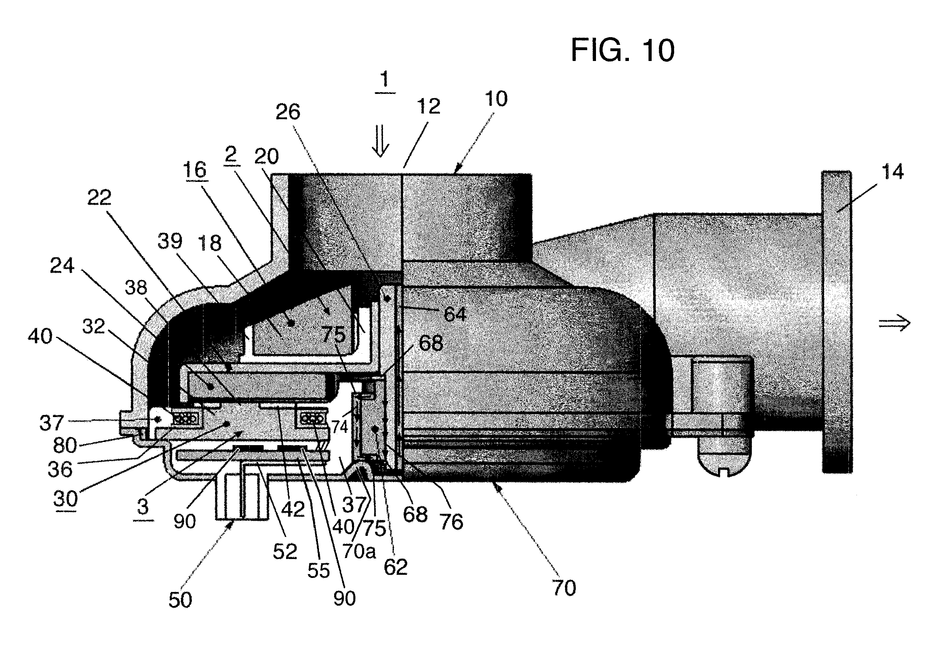

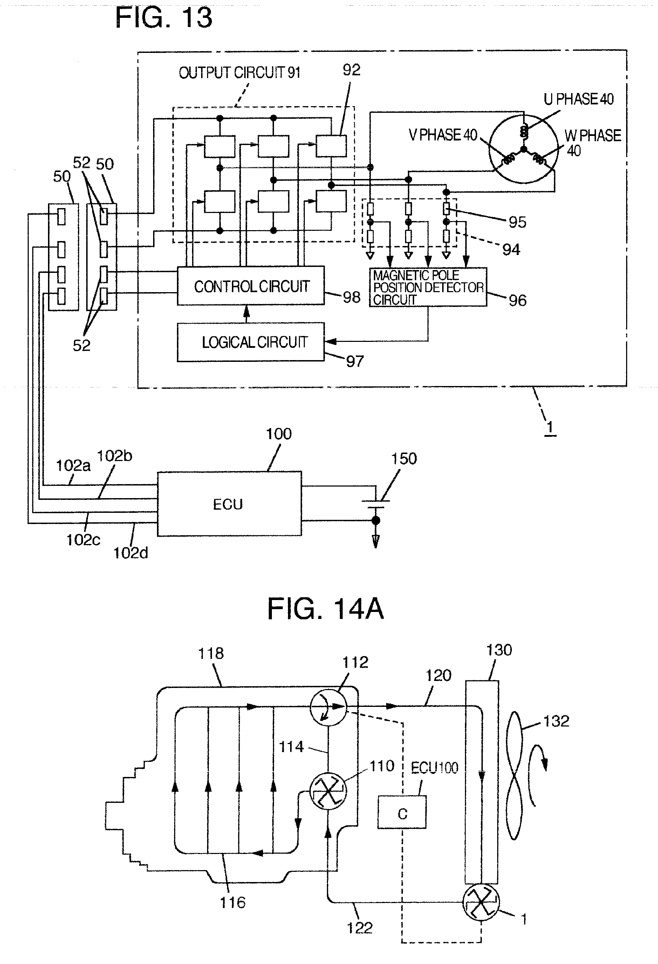

Fig. 10 is a partially broken cross sectional view showing the side and partial internal structure of a brushless motor pump according to another embodiment, and Fig. 13 is a circuit block diagram including a motor control unit and the like. In Figs. 10 and 13, constituent elements having the same functions as those shown in Figs. 1 to 9 are represented by using identical reference numerals, and the duplicated description thereof is omitted. In this embodiment, winding ends of the armature coils 40 of each phase are connected to the board 55 via an induced voltage detector circuit 94 made of induced voltage detector elements 95 and the like for detecting the phase. In this embodiment, three voltage division circuits each constituted of two serially connected resistors are used as induced voltage detector elements. In addition to the induced voltage detector circuit 94, electronic components 90 such as switching elements 92 are mounted on the board 55 to constitute a. control board. Specifically, a magnetic pole position detector circuit 96, an output circuit 91 made of a plurality of switching elements 92, a control circuit 98 and a logical circuit 97 are mounted on the board 55. The control board 55, core 30 and terminals 52 are integrally molded by resin to constitute the stator unlit 3.

In this embodiment, an ECU 100 and control board 55 are interconnected by four lead wires 102 including two motor feeder wires 102c and 102d and two signal lines 102a and 102b. A command signal from ECU 100 of a vehicle or the like is transmitted via the signal line 102a and a drive signal for the motor responsive to the command signal is received via the signal line 102b. By mounting the motor control circuit in the motor, a cooling efficiency of the heat generator such as switching elements is increased so that reliability is improved. Further, the structure of ECU 100 mounted in a mount body such as a vehicle can be simplified, the types of vehicles can be broadened and a variety of mount bodies can be designed.

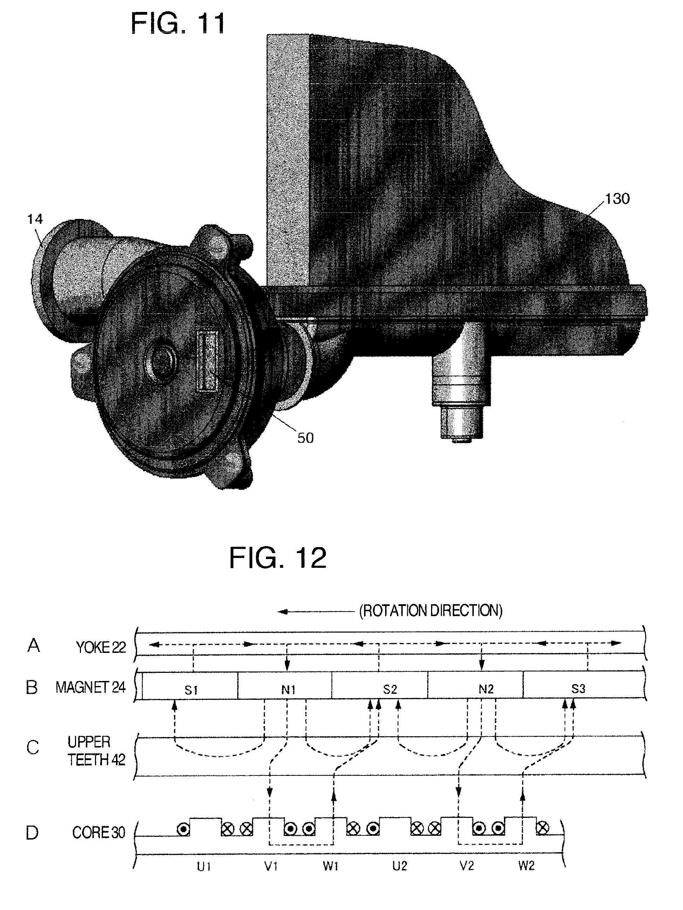

With reference to Figs. 12 and 13 and other drawings, description will be made on the operation of the flattened brushless motor pump constructed as above, by using as an example the motor control board 55 built in the motor pump. In the embodiment, although the rotor has six poles and the stator magnetic poles (cores) are nine, the invention is not limited only to this arrangement. The rotation direction and power feeder pattern are specified for the convenience of description, and this arrangement is not limitative.

ECU 100 driven by a battery 150 transmits a pump drive command via the signal line 102a. The control circuit 98 with a built-in motor receives the pump drive command via the connectors 50 and 50 and terminal 52, and outputs an activation signal to the output circuit 91 in accordance with the pump drive command to start on/off control of six switching elements 92.

Since the positions of the magnets 24 of the rotor unit 2 cannot be identified at the time of activation, a reset operation is executed to feed power to arbitrary phases, e.g., U-V coils including U1-V1, U2-V2 and U3-V3 coils. U1, U2,... are U-phase armature coils, V1, V2,... are V-phase armature coils, and W1, W2,... are M'-phase armature coils (refer to Fig. 13). As shown in Fig. 12, magnets S1 and N1 face the magnetic poles of the U1 and V1 coils, magnets S2 and N2 face the magnetic poles of the U2 and V2 coils, and similarly magnets S3 and N3 face the magnetic poles of the U3 and V3 coils (not shown). In this reset state, switching is stopped once.

In accordance with the positions of facing magnets 24, the control circuit 98 outputs a power feeder timing signal to feed power to the V-W coil in this embodiment. Therefore, three coils Vi-W1, V2-W2 and V3-W3 of each phase are energized at the same time so that magnetic fluxes schematically shown in Fig. 12 are generated.
In Fig. 12, a direction, of current flowing from the rear to front of a drawing sheet is indicated by a dot mark in a circle, a direction of current flowing from the front to rear of the drawing sheet is indicated by a cross mark in a circle, and only particular excitation coils are shown for the purpose of convenience. As the V1 coil is excited, a magnetic force is generated flowing from the nearby magnet N1, and as the W1 coil is excited, a magnetic force is generated flowing into the magnet S2. At the same time, as the V2 coil is excited, a magnetic force is generated flowing from the nearby magnet N2, and as the W2 coil is excited, a magnetic force is generated flowing into the magnet S3. Similarly, although not shown, magnetic forces are generated in V3-W3 coils so that a force in a constant direction, i.e., left direction as viewed in the drawing sheet, is applied to the rotor. Then, the V-U coils are excited so that the rotor gradually increases its speed.

By sequentially switching the power feeding order of coils, the rotor rotates in a predetermined direction. During rotation, a magnetic path along the circumferential direction is formed in the upper teeth 42 and a magnetic gap between poles is filled. Therefore, cogging torque and torque ripple can be relaxed and the magnetic characteristics can be improved. Particularly, if the core 30 and upper teeth 42 are both made of the bonded soft magnetic material three-dimensionally insulated, magnetic fluxes become easy to flow smoothly in three-dimensional directions so chat the magnetic characteristics can be improved. As the speed reaches a constant rotation speed after the above-described state continues, induced voltages are generated by the magnets 24 and armature coils 40 and read by the induced voltage detector circuit 94.

The magnetic pole position detector circuit 96 generates an inter-phase detection voltage corresponding to a difference between induced voltages of each phase detected by the induced voltage detector circuit 94, and detects a zero cross point of the inter-phase detection voltage to output magnetic pole position detection signals, for example, having a pulse width of 180° and shifted by 120°, to the logical circuit 97. The logical circuit 97 generates a power feeding timing signal having a pulse width of, e.g., 120° for on/off control of each of six switching elements 92. In accordance with the power feeding timing signal, the control circuit 98 conducts on/off control of each switching element 92 of the output circuit 91.

Fluid sucked from the suction port 12 of the pump casing by the impeller 16 rotated in this manner is discharged from the discharge port 14. After the impeller 16 reaches a predetermined rotation speed, the motor pump 1 is operated in accordance with a liquid temperature and a control time to thereby adjust a proper flow rate. During this operation, some fluid flows from the outer circumference of the yoke 22 via a gap between the stator unit 3 and magnet 24, partially downward via a gap 76 between the inner circumference of the bearing 62 and the rotary shaft 26 and partially downward from the end groove 75 of the bearing along the groove 74 at the outer circumference of the bearing 62 to the lower end groove 75 of the bearing 62. Thereafter, the fluid flowed along these flow paths flows into the inside of the projection 70a of the motor cover 70, returns along the inner wall of the motor cover 70, flows into and upward the through hole 64 of the rotary shaft 26, is discharged from the upper end of the rotary shaft 26, and returns to the impeller 16 side. In this manner, the bearing 62 maintains the function of an in-water bearing.
In this operation example, a general commonly known position-sensor-less control may be conducted, or a rotor position estimation unit having a microcomputer may be added to properly improve the rotor position detection precision.

Description will be made on a vehicle electric water pump in which a liquid cooling unit for circulating cooling water between a vehicle engine and a heat exchanger is formed by mounting the brushless motor pump constructed as above on the heat exchanger (radiator) or the vehicle internal combustion engine. In this caste, as shown in Fig. 11, the brushless motor pump can be coupled directly to a radiator 130. The operation will be described with reference to Figs. 14A and 14B schematically showing flow paths of cooling water in the engine.

Description will be made first on the case in which the brushless motor pump 1 of the present invention is used together with a power pump 110 driven by the engine, as shown in Fig. 14A. In an ordinary operation (in an engine operation), the engine runs the power pump 110. Namely, until a cooling water temperature reaches a monitor temperature (predetermined temperature) of a thermostat type control valve 112 after the operation start, cooling water circulates in an engine block 118 via a passage 114, power pump 110 and flow paths 116 in the engine. When the cooling water temperature reaches the predetermined temperature, the thermostat type control valve 112 operates so that the cooling water flows in the radiator 130 via an upper hose 120 to be cooled by a fan 132 and thereafter flows into the flow paths 116 in the engine via the motor pump 1, lower hose 122 and pump 110. In this case, the motor pump 1 is not driven but functions merely as a pass point of cooling water, and the impeller 16 floats (idle rotation). The liquid cooling unit is constituted of the pumps 1 and 110, flow paths 114 and 116, hoses 120 and 122, valve 112, radiator 130 and the like.

If the liquid temperature is high, for example, during an idling stop or after a high load running such as mountain running, the thermostat type control valve 112 operates to establish the flow path to the upper hose 120 and at the same time a control unit C (ECU 100) of the vehicle instructs to drive the motor pump 1. Therefore, cooling water flowed from the engine block 110 is cooled in the radiator 130 by the fan 132, and thereafter returns to the engine block 118 via the motor pump 1 and power pump 110. In this case, the impeller of the power pump 110 floats (idle rotation). The liquid temperature can be controlled in this manner.

Next, with reference to Fig. 14B, description will be made on the liquid cooling unit using only the brushless motor pump 1 of the present invention without mounting the power pump 110 to be driven by the engine. In this case, a water temperature in the running engine is detected with a temperature sensor 134, and this detection signal is read by the vehicle control unit C (ECU 100) to judge whether the liquid temperature is high. If the liquid temperature is high, ECU 100 sends a pump operation command to the motor pump 1. With this pump operation, cooling water flows from the engine block 118 to the radiator 130 via the upper hose 120 to be cooled by the fan 132, and thereafter flows into the flow paths 116 in the engine via the motor pump 1 and lower hose 122. Liquid circulates in the predetermined flow paths to properly adjust the liquid temperature. In accordance with the liquid temperature detected with the temperature sensor 134, the control unit C (ECU 100) may issue a command for on/off control of the motor pump 1. Alternatively, in accordance with the liquid temperature, for example, a liquid temperature of 80 or read with the sensor 134, the control unit C may issue a command so that a power feeding rate of the motor is suppressed to, for example, about 50 %, and thereafter the power feeding rate is gradually increased up to 100 %.

In the embodiments described above, a so-called axial gap type brushless motor has been described by way of example. A radial gap type brushless motor may also be used. Further, in the embodiments described above, description has been made on the assumption of a rotor position-sensor-less motor. Instead, a position sensor may be provided in the control board in the motor to be integrally molded with resin. In this case, if the control board is built in the motor, it is not necessary to guide position sensor leads to the outside of the motor, but processing can be conducted in the motor so that the position sensor is mounted in the motor having a built-in control board.
The embodiments are not limited to the fluid pump for a radiator (heat exchanger), but other types of fluid pumps may also be used.

### INDUSTRIAL APPLICABILITY

According to the present invention, in a fluid pump, particularly in a flattened brushless motor pump and in a vehicle electric water pump unit using the flattened brushless motor pump suitable for use as a liquid cooling apparatus for a vehicle internal combustion engine radiator and the like, it is not necessary to seal bearing elements watertight, it is possible to retain a pump ability by improving the motor characteristics while a thin motor is adopted, to allow a small space for counting the pump on a radiator or the like, and to simplify a cooling system piping of the unit.

### BRIEF DESCRIPTION OF THE DRAWINGS

[Fig. 1] A partially broken cross sectional view showing the side and partial internal structure of a brushless motor pump according to an embodiment of the present invention.
[Fig. 2A] A perspective view showing the outer appearance of the brushless motor pump according to the embodiment of the present invention.
[Fig. 2B] An equivalent circuit diagram of the brushless motor pump according to the embodiment of the present invention.
[Fig. 3] A bottom view of the brushless motor pump with a motor cover being dismounted according to the embodiment of the present invention.
[Fig. 4] A perspective view of a bearing of a rotor.
[Fig. 5] A cross sectional view showing an example of the structure of a rotor.
[Fig. 6] A cross sectional view showing another example of the structure of a rotor.
[Fig. 7A] A perspective view showing the outer appearance of a core of a stator.
[Fig. 7B] A graph showing the characteristics of an eddy current loss of a sintered core.
[Fig. 7C] A diagram for explaining the magnetic characteristics of bonded soft magnetic material as the material of a core.
[Fig. 7D] A diagram for the magnetic characteristics of a laminated iron steel plate as the material of a core.
[Fig. 8] A perspective view showing the outer appearance of a portion of a stator core and upper teeth.
[Fig. 9] A diagram showing motor performance curves of the brushless motor pump according to the embodiment of the present invention.
[Fig. 10] A partially broken cross sectional view showing the side and partial internal structure of a. brushless motor pump according to another embodiment of the present invention.
[Fig. 11] A perspective view showing the outer appearance of the brushless motor pump mounted on a portion of an engine radiator according to the present invention.
[Fig. 12] A diagram for explaining a control operation of a motor of the brushless motor pump according to the present invention.
[Fig. 13] A circuit block diagram of a motor control unit and the like of the brushless motor pump according to the present invention.
[Fig. 14A] A schematic diagram showing the brushless motor pump mounted on a portion of an engine radiator according to the present invention, in which the brushless motor pump of the present invention is used together with a power pump to be driven by an engine.
[Fig. 14B] A schematic diagram showing the brushless motor pump mounted on a portion of an engine radiator according to the present invention, in which only the brushless motor pump of the present invention is used.
[Fig. 15] A cross sectional view showing an example of the structure of a rotor and fluid flow paths.

## Claims

1. A flattened brushless motor pump comprising:
a flattened brushless motor;
an impeller coupled to a rotary shaft of said flattened brushless motor;
a pump casing for housing said flattened brushless motor and said impeller, said pump casing having a suction port for sucking liquid and a discharge port for discharging liquid; and
a motor cover constituting a portion of said pump casing for holding a bearing of said flattened brushless motor, said bearing bearing said rotary shaft rotatively,
wherein:
the flattened brushless motor pump sucks liquid from said suction port and discharges liquid from said discharge port by rotating the rotary shaft of said flattened brushless motor; and
said flattened brushless motor comprises:
a stator unit having cores around which a plurality of armature coils are wound and terminals electrically connected to said armature coils, and being formed by molding said cores and said terminals with resin in a watertight manner: and
a rotor unit having magnets disposed facing said cores via a gap, said rotary shaft and a yoke fixed to said rotary shaft and holding said magnets,
wherein said bearing is an in-water bearing for sliding said rotary shaft by a water film.

2. The flattened brushless motor pump according to claim 1, wherein a hole is disposed passing through said rotary shaft along an axial direction so that liquid flowed from said suction port of the pump passes along an inner circumferential portion of said bearing, thereafter flows in said hole and returns to a side of said suction port.

3. The flattened brushless motor pump according to claim 2, wherein a plurality of grooves as fluid flow paths are formed in an outer circumferential portion of said bearing along the axial direction of said rotary shaft so that liquid flowed from said suction port passes through said plurality of grooves, thereafter flows in said hole and returns to the side of said suction port.

4. The flattened brushless motor pump according to claim 1, wherein said cores are made by integrally molding bonded soft magnetic material.

5. The flattened brushless motor pump according to claim 4, wherein upper teeth of a ring shape are disposed on a plane of said cores on a side of said armature coils, concentrically with said rotary shaft, said upper teeth being made of a same material as material of said cores.

6. The flattened brushless motor pump according to any one of claims 1 to 5, wherein said impeller is made of resin and molded integrally with said yoke.

7. The flattened brushless motor pump according to any one of claims 1 to 5, wherein said impeller is made of resin and molded integrally with said yoke, covering said magnets excepting a contact plane between said magnets and said yoke.

8. A flattened brushless motor pump comprising:
a flattened brushless motor;
an impeller coupled to a rotary shaft of said flattened brushless motor;
a pump casing for housing said flattened brushless motor and said impeller, said pump casing having a suction port for sucking liquid and a discharge port for discharging liquid; and
a motor cover constituting a portion of said pump casing for holding a bearing of said flattened brushless motor, said bearing bearing said rotary shaft rotatively,
wherein:
the flattened brushless motor pump sucks liquid from said suction port and discharges liquid from said discharge port by rotating the rotary shaft-of said flattened brushless motor; and
said flattened brushless motor comprises:
a stator unit having cores around which a plurality of armature coils are wound, a control board for feeding power to said armature coils and driving and controlling the motor and terminals electrically connected to said control board, and being formed by molding said cores, said control board and said terminals with resin in a watertight manner; and
a rotor unit having magnets disposed facing said cores via a gap and a yoke fixed to said rotary shaft and holding said magnets,
wherein said bearing is an in-water bearing for sliding said rotary shaft by a water film.

9. The flattened brushless motor pump according to claim 8, wherein a hole is disposed passing through said rotary shaft along an axial direction so that liquid flowed from said suction port of the pump passes along a circumferential portion of said bearing, thereafter flows in said hole and returns to a side of said suction port.

10. The flattened brushless motor pump according to claim 9, wherein a plurality of grooves as fluid flow paths are formed in an outer circumferential portion of said bearing along the axial direction of said rotary shaft so that liquid flowed from said suction port passes through said plurality of grooves, thereafter flows in said hole and returns to the side of said suction port.

11. The flattened brushless motor pump according to claim 8, wherein said cores are made by integrally molding bonded soft magnetic material.

12. The flattened brushless motor pump according to claim 11, wherein upper teeth of a ring shape are disposed on a plane of said cores on a side of said armature coils, concentrically with said rotary shaft, said upper teeth being made of a same material as material of said cores.

13. The flattened brushless motor pump according to any one of claims 8 to 12, wherein said impeller is made of resin and molded integrally with said yoke.

14. The flattened brushless motor pump according to any one of claims 8 to 12, wherein said impeller is made of resin and molded integrally with said yoke, covering said magnets excepting a contact plane between said magnets and said yoke.

15. A vehicle electric water pump constituting a liquid cooling unit for circulating cooling water between a vehicle engine and a heat exchanger, the vehicle electric water pump comprising:
a flattened brushless motor;
an impeller coupled to a rotary shaft of said flattened brushless motor;
a pump casing for housing said flattened brushless motor and said impeller, said pump casing having a suction port for sucking liquid and a discharge port for discharging liquid; and
a motor cover constituting a portion of said pump casing for holding a bearing of said flattened brushless motor, said bearing bearing said rotary shaft rotatively,
wherein:
the vehicle electric water pump sucks liquid from said suction port and discharges liquid from said discharge port by rotating the rotary shaft of said flattened brushless motor; and
said flattened brushless motor comprises:
a stator unit having cores around which a plurality of armature coils are wound and terminals electrically connected to said armature coils, and being formed by molding said cores and said terminals with resin in a watertight manner; and
a rotor unit having magnets disposed facing said cores via a gap, said rotary shaft and a yoke fixed to said rotary shaft and holding said magnets,
wherein said bearing is an in-water bearing for sliding said rotary shaft by a water film.
